# EUROPEAN PATENT APPLICATION

(11) **EP 0 917 824 A2**
(43) Date of publication of application: **26.05.1999**
(21) Application number: 98309481.4
(22) Date of filing: 19.11.1998
(51) Int. Cl.: A22B 3/08, A22B 5/00

(54) **Device and method for cutting through the trachea and oesophagus of a carcass**

(30) Priority: 19.11.1997 DK 131397
(71) Applicant: Slagteriernes Forskningsinstitut, 4000 Roskilde (DK)
(72) Inventor: Nielsen, Jens Ulrich, 2880 Bagsvaerd (DK)
(74) Representative: Bayliss, Geoffrey Cyril

(57) **Abstract**

The invention relates to a device for cutting through the trachea and oesophagus (1,2) of a carcass which has been opened in the abdomen and chest and is suspended by the hind legs. The device comprises a pair of closeable jaws (3), which in open state can pass either side of the trachea and oesophagus in a carcass and in closed state form an aperture of sufficient size to receive the section of the trachea and oesophagus enclosed by the jaws. The device further includes a cutting mechanism (4) lying below the common plane of the jaws and arranged to cut through the trachea and oesophagus (1,2) after the pair of jaws (3) has closed round a section of the trachea and oesophagus.

The closeable pair of jaws (3) is moved mainly in a horizontal direction towards the carcass such that the free ends of the jaws pass either side of the trachea and oesophagus (1,2). The jaws close in a mainly non-squeezing manner round the trachea and oesophagus. The pair of jaws is moved mainly vertically down towards the head of the carcass and comes to a halt at a distance from the latter, whereupon the cutting mechanism (4) is moved into the chest opening of the carcass with its cutting parts on either side of the trachea and oesophagus. The parts close, thus cutting through the trachea and oesophagus (1,2), preferably below or at the level of the larynx (5). The pair of jaws in closed state is moved mainly horizontally away from the carcass while pulling out the trachea and oesophagus from the carcass, and opens in a position outside the carcass, thus releasing the trachea and oesophagus.

## Description

The present invention relates to a device and a method for cutting through the trachea and oesophagus of a carcass which has been opened in the abdomen and chest and is suspended by the hind legs.

European Patent Applications Nos. 98300726 and 98303526 (Slagteriernes Forskningsinstitut) describe systems and methods for use in automatic removal of intestines and organs from in particular suspended pig carcasses on a slaughter line.

The purpose of the present invention is to provide a device and a method whereby the trachea and oesophagus in a carcass which has been opened in the abdomen and chest can be automatically cut through, so that the organs (the pluck) connected with the trachea and oesophagus can be removed from the carcass.

The device according to the invention is characterised in that it comprises a pair of closeable jaws, which in open state can pass either side of the trachea and oesophagus in a carcass and in closed state form an aperture of sufficient size to receive the section of the trachea and oesophagus enclosed by the jaws, and that the device has a cutting mechanism lying below the common plane of the jaws arranged to cut through the trachea and oesophagus after the pair of jaws has closed round a section of the trachea and oesophagus.

Preferably, the aperture is sufficiently large to receive the section of trachea and oesophagus in a mainly non-squeezing manner.

The aperture may be so small that the larynx of the trachea and the corresponding section of oesophagus cannot pass through it, and the cutting mechanism may be arranged to cut through the trachea and oesophagus below or at the level of the larynx.

Preferably, the cutting mechanism is in the form of a pair of shears with two cutting blades.

In a preferred embodiment of the invention the pair of jaws and the cutting mechanism can be moved in a mainly vertical direction, and the mainly vertical downwards motion towards the carcass head can be arranged to halt the pair of jaws and the cutting mechanism at a pre-defined distance from the underside or the jaw of the head.

In another embodiment the pair of jaws can be moved in a mainly horizontal direction towards the carcass chest and it may be designed to close after the jaws have passed either side of the trachea and oesophagus.

The cutting mechanism may be movable in a mainly horizontal direction towards the carcass breast, preferably independently of a mainly horizontal movement by the pair of jaws.

Preferably, the pair of jaws and the cutting mechanism can be moved in a mainly vertical direction downwards towards the carcass head, after the pair of jaws has been moved towards the carcass and closed round the trachea and oesophagus in a mainly non-squeezing manner, but before the cutting mechanism has been inserted in a mainly horizontal direction into the carcass chest opening.

The cutting mechanism may be arranged to cut through the trachea and oesophagus after being inserted into the carcass chest opening in the bottom position of the mechanism with the pair of jaws supporting the trachea and oesophagus.

The pair of jaws may be arranged to move in closed position in a mainly horizontal direction away from the carcass, after cutting through the trachea and oesophagus.

The method according to the invention is characterised in that a closeable pair of jaws is moved mainly in a horizontal direction towards the carcass such that the free ends of the jaws pass either side of the trachea and oesophagus, that the jaws close in a mainly non-squeezing manner round the trachea and oesophagus, that the pair of jaws is moved mainly vertically down towards the head of the carcass and comes to a halt at a distance from the latter, that a cutting mechanism situated beneath the common plane of the jaws is moved into the neck or chest opening of the carcass with its cutting parts on either side of the trachea and oesophagus, that the parts are closed, cutting through the trachea and oespphagus, preferably below or at the level of the larynx, that the pair of jaws in closed state is moved mainly horizontally away from the carcass while pulling out the trachea and oesophagus from the carcass, and that the pair of jaws opens in a position outside the carcass, thus releasing the trachea and oesophagus.

The trachea and oesophagus may be pulled out to a position traversed by the hook of a pluck conveyor at such a distance that the trachea and oesophagus are engaged by the hook, as it passes by, and are turned over to this latter when the pair of jaws opens.

The trachea and oesophagus may be cut through before, during or after the loosening or freeing from the inside of the carcass of the organs attached to the trachea and oesophagus, e.g. by means of one of the devices or methods described in the above mentioned European Patent Applications. In this way the whole set of intestines and organs, from the larynx to the fat end, can be automatically removed in one piece, including diaphragm and leaf fat.

When a mainly horizontal movement is performed, this means in the present description that the movement may deviate from a strictly horizontal movement by up to 20 to 30°. In the same way, a mainly vertical movement may deviate by up to 20 to 30° from a strictly vertical movement. The same applies for other directional statements such as "mainly horizontal direction" and "mainly vertical direction".

By way of example, a specific device and method according to the invention will be described below in greater detail with reference to the drawings, wherein
- fig. 1 in diagrammatic form shows a device according to the invention for cutting through the trachea and oesophagus in a carcass,
- fig. 2 shows a gripping tool in the device and
- fig. 3 shows a cutting tool in the same device.

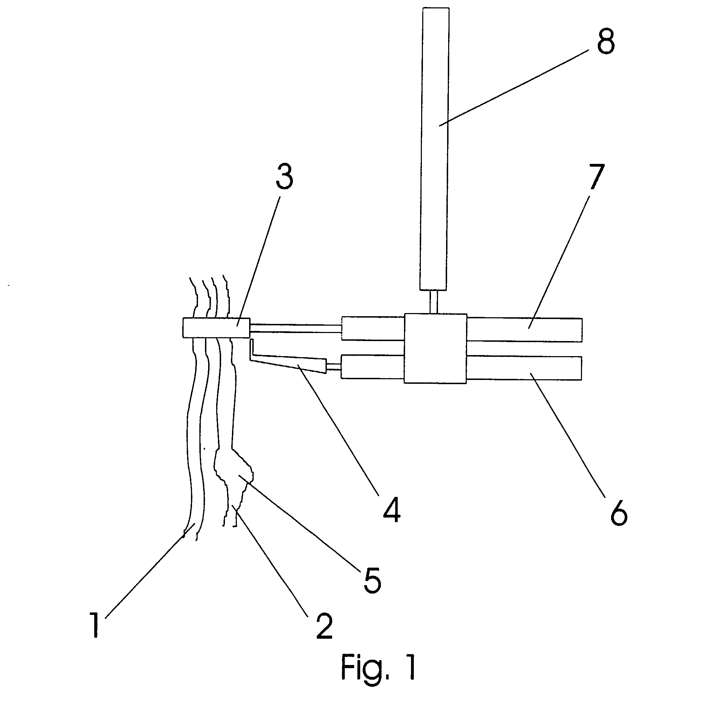

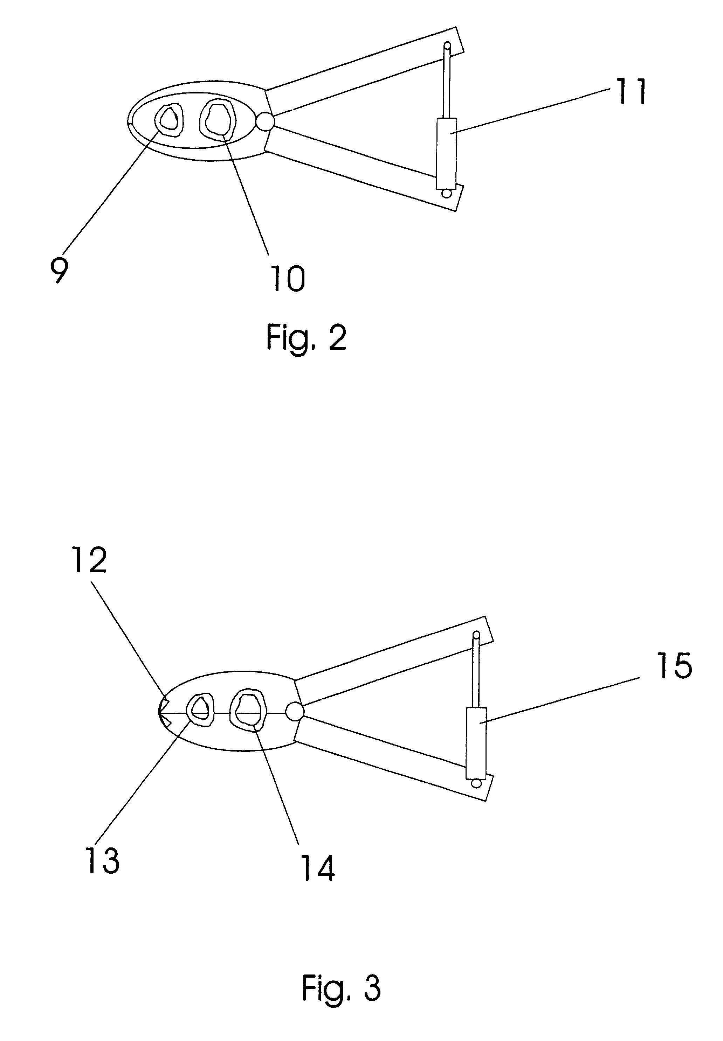

The device in fig. 1 is shown holding the oesophagus 1 and trachea 2 of a carcass which has been cut open in the abdomen and chest (including neck) and is suspended by the hind legs from a gambrel which can be moved along an overhead conveyor of a slaughter line. The tubes are held by a pair of jaws 3 in the gripping tool shown in fig. 2. As can be seen from this figure the space in the area between the closed jaws is sufficiently large for oesophagus 9 and trachea 10 not to be squeezed. The jaws may be opened and closed by a pneumatic or hydraulic cylinder unit 11 actuating the arms to which the jaws are attached.

Under the jaws 3 is a cutting tool with a pair of cutting blades 4 (fig. 1). These are, in the form of the cutting tool shown in fig. 3, designed for cutting through the oesophagus 13 and trachea 14 and is able to perform a cutting movement by means of a pneumatic or hydraulic cylinder unit 15 arranged between the two arms to which the blades are attached. At their ends, each of the blades has a 90° bend 12 arranged to cut through the connective tissue on the back of the oesophagus.

The holding tool and cutting tool digrammatically shown in fig. 1 as a pair of jaws 3 and a pair of blades 4 are separately mounted on the ends of piston rods in two pneumatic or hydraulic cylinder units 6 and 7. By means of these units, jaws 3 and blades 4 can thus be moved independently in a mainly horizontal direction towards the trachea and oesophagus of a carcass.

Units 6 and 7 are fixed to a common bracket mounted on the end of a piston rod in a mainly vertically arranged cylinder unit 8, which may be of pneumatic or hydraulic type. The pairs of jaws 3 and of blades 4 are thus able to move together in a mainly vertical direction down along the trachea and oesophagus of a carcass.

The common bracket for units 6 and 7 has a contact or stop surface not shown here, which stops the mainly vertical downwards motion when the surface meets the underside of the carcass head or similar.

The device forms part of a larger system for the automatic removal of intestines and organs. The remainder of the system is not described here as it may be variously designed. The above European Patent Applications Nos. 98300726 and 98303526 describe examples of suitable constructions.

In the following functional description of the device it is assumed that intestines and organs have been largely loosened from the inside of the carcass before the cutting operation begins, but the operation may also begin before all loosening operations have been carried out, or even before any loosening has been performed.

In the starting position, the cylinder units 6 and 7 with their tools are in an upper position with the piston rod of unit 8 retracted in the unit housing, cf. fig. 1. The piston rods of units 6 and 7 are similarly retracted into their cylinder housings, such that the tools are in an inactive position.

The first step in the cutting operation is that the device and the carcass are brought into position in relation to each other (if this has not already been done in a previous working operation), such that the trachea and oesophagus are mainly lying in the vertical plane assumed by the cylinder units 6, 7 and 8.

By means of cylinder unit 11 (fig. 2), the pair of jaws 3 is made to open and the jaws are inserted into the chest opening of the carcass by activation of unit 7. When the jaws have taken up the position shown in fig. 1, the movement stops automatically and the jaws are closed so as to enclose the tubes in a non-squeezing manner.

Unit 8 is next activated so that the holding and cutting tools move downwards towards the carcass head. In this movement, the pair of jaws slides down the tubes tearing through the connective tissue which holds the tubes in the carcass chest and neck region.

The downwards movement is halted when the stop surface on the bracket meets the underside of the carcass head. In the stop position the pair of jaws has reached the larynx 5 on the trachea 2, and may have stretched the tube slightly, as the larynx is too large to pass through the opening between the jaws in their closed state.

The pair of blades 4 in the cutting tool is opened by activation of cylinder unit 15 (fig. 3). The blades are then inserted by means of unit 6 into the chest/neck opening of the carcass, being positioned on either side of the larynx 5 and the corresponding part of the oesophagus at the level of the larynx. Unit 15 is activated to bring the blades together, thus cutting through the larynx (approximately in the middle) and the oesophagus. The bends 12 on the blades cut through the connective tissue behind the oesophagus.

The cutting tool opens again and is retracted from the carcass opening by means of unit 6, with the tool reassuming its rearmost, inactive position.

The holding tool with pair of jaws 3 is retracted by means of unit 7 from the carcass opening to a position opposite a pluck conveyor which is conveying pluck hooks. The mutual position between the pair of jaws 3 and the conveyor is such that the trachea and oesophagus hang in the path of a hook being transported by the conveyor. The trachea and oesophagus and the attached organs (pluck, intestines etc.) are thus caught by the hook, and when the pair of jaws 3 subsequently automatically opens, the trachea and the oesophagus and attached organs are turned over to the hook and moved onwards thereby, thus pulling the organs completely out of the carcass. By means of the pluck conveyor they may subsequently be moved to other workstations for further treatment. Alternatively, the pluck and intestines may be separated immediately after transfer to the hook for separate transport by the pluck conveyor and a gut pan system.

The tools of the device are returned to their initial position and are then ready to repeat the cutting operation on a new carcass.

## Claims

1. Device for cutting through the trachea (2) and oesophagus (1) of a carcass which has been opened in the chest and abdomen and which is suspended by the hind legs, **characterised** in that it comprises a pair of closeable jaws (3), which in open state can pass either side of the trachea and oesophagus in a carcass and in closed state form an aperture of sufficient size to receive the section of the trachea and oesophagus enclosed by the jaws, and that the device has a cutting mechanism (4) lying below the common plane of the jaws arranged to cut through the trachea and oesophagus after the pair of jaws has closed round a section of the trachea and oesophagus.

2. Device according to claim 1, **characterised** in that the aperture is sufficiently large to receive the section of trachea and oesophagus in a mainly non-squeezing manner.

3. Device according to claim 1, **characterised** in that the aperture is so small that the larynx (5) of the trachea and the corresponding section of oesophagus cannot pass through it, and that the cutting mechanism (4) is arranged to cut through the trachea and oesophagus below or at the level of the larynx.

4. Device according to claim 1, **characterised** in that the cutting mechanism is in the form of a pair of shears with two cutting blades.

5. Device according to claim 1, **characterised** in that the pair of jaws (3) and the cutting mechanism (4) can be moved in a mainly vertical direction, and that the mainly vertical downwards motion towards the carcass head is arranged to halt the pair of jaws and the cutting mechanism at a pre-defined distance from the underside or the jaw of the head.

6. Device according to claim 1, **characterised** in that the pair of jaws can be moved in a mainly horizontal direction towards the carcass chest and that it is designed to close after the jaws have passed either side of the trachea and oesophagus.

7. Device according to claim 1, **characterised** in that the cutting mechanism (4) can be moved in a mainly horizontal direction towards the carcass breast, preferably independently of a mainly horizontal movement by the pair of jaws.

8. Device according to claim 1, **characterised** in that the pair of jaws (3) and the cutting mechanism (4) can be moved in a mainly vertical direction downwards towards the carcass head after the pair of jaws has been moved towards the carcass and closed round the trachea and oesophagus in a mainly non-squeezing manner, but before the cutting mechanism has been inserted in a mainly horizontal direction into the carcass chest opening.

9. Device according to claim 1, **characterised** in that the cutting mechanism (4) is arranged to cut through the trachea and oesophagus after being inserted into the chest opening of the carcass in the bottom position of the mechanism with the pair of jaws (3) supporting the trachea (2) and oesophagus (1).

10. Device according to claim 1, **characterised** in that the pair of jaws (3), after cutting through the trachea and oesophagus, is arranged to move in closed position in a mainly horizontal direction away from the carcass.

11. Method for cutting through the trachea (2) and oesophagus (1) of a carcass which has been opened in the abdomen and chest and is suspended by the hind legs, **characterised** in that a closeable pair of jaws (3) is moved mainly in a horizontal direction towards the carcass such that the free ends of the jaws pass either side of the trachea and oesophagus, that the jaws are closed in a mainly non-squeezing manner round the trachea and oesophagus, that the pair of jaws (3) is moved mainly vertically down towards the head of the carcass and comes to a halt at a distance from the latter, that a cutting mechanism (4) situated beneath the common plane of the jaws is moved into the neck or chest opening of the carcass with its cutting parts on either side of the trachea and oesophagus, that the parts are closed, thus cutting through the trachea and oesophagus, preferably below or at the level of the larynx, that the pair of jaws (3) in closed state is moved mainly horizontally away from the carcass while pulling out the trachea and oesophagus from the carcass, and that the pair of jaws opens in a position outside the carcass, thus releasing the trachea and oesophagus.

12. Method according to claim 11, **characterised** in that the trachea and oesophagus are pulled out to a position traversed by the hook of a pluck conveyor at such a distance that the trachea and oesophagus are engaged by the hook as it passes by and are turned over to this latter when the pair of jaws opens.
